# EUROPÄISCHE PATENTSCHRIFT

(11) **EP 0 651 868 B1**
(45) Veröffentlichungstag und Bekanntmachung des Hinweises auf die Patenterteilung: **26.03.1997**
(21) Anmeldenummer: 94914303.6
(22) Anmeldetag: 17.05.1994
(51) Int. Cl.: F16K 1/12, F16K 3/24, F16K 37/00

(54) **VENTIL**
VALVE
ROBINET-VANNE

(30) Priorität: 19.05.1993 CH 1524/93
(43) Veröffentlichungstag der Anmeldung: 10.05.1995
(73) Patentinhaber: Georg Fischer Rohrleitungssysteme AG, CH-8201 Schaffhausen (CH)
(72) Erfinder: SCHALK, Adelbert, D-79793 Wut-Horheim (DE)
(74) Vertreter: Sparing - Röhl - Henseler Patentanwälte
(86) Internationale Anmeldenummer: CH9400090
(87) Internationale Veröffentlichungsnummer: WO9427069

(56) Entgegenhaltungen:
- DE-A- 2 318 165
- FR-A- 1 074 514
- FR-A- 2 255 523
- GB-A- 917 929
- US-A- 1 894 314
- US-A- 2 416 787
- US-A- 3 784 156
- US-A- 4 431 020

## Beschreibung

Die Erfindung betrifft ein Ventil, wie es im Oberbegriff von Anspruch 1 gekennzeichnet ist.

Ein derartiges Ventil ist aus US-A-2 416 787 bekannt. Dieses Ventil umfaßt ein Gehäuse, das einen Durchflußkanal aufweist, in dem ein in in beiden Strömungsrichtungen strömungsgünstig ausgebildeter Strömungskörper mit in Achsrichtung des Durchflußkanals entgegengesetzt zueinander gerichteten Anströmteilen angeordnet ist. Ferner ist hierbei eine in Achsrichtung verschiebbare, im geschlossenen Zustand mit dem Strömungskörper in dichtendem Eingriff stehende Schieberhülse vorgesehen. Die Schieberhülse ist endseitig mit einer Kolbenfläche ausgestattet, auf die ein Druckmedium einwirkt. Ferner wird die Schieberhülse von einer Führungshülse aufgenommen, deren Innenfläche einen Teil des Strömungskanals bildet. Auf diese Weise ist die Schieberhülse relativ zum Strömungskörper verschiebbar und mit diesem in Eingriff bringbar, wobei allerdings der den Strömungskörper aufnehmende Gehäuseteil nicht am übrigen Gehäuse angeflanscht werden kann, da sonst die Schieberhülse nicht verschiebbar wäre. Vielmehr ist eine Verbindung ohne Anlageflächen nur über Schraubbolzen möglich, was jedoch in bezug auf eine genaue Justierung kritisch ist. Benachbart zum Strömungskörper sind noch zusätzliche Führungen für die Schieberhülse notwendig. Außerdem tritt bei einem Undichtwerden der Dichtung zwischen dem den Strömungskörper aufnehmenden Gehäuseteil und der Schieberhülse das geförderte Medium ohne weiteres in die Umgebung aus.

Ein Ventil mit einem in einem axialen Durchflußkanal eines Gehäuses angeordneten Strömungskörper und mit einem, mittels eines Druckmediums beaufschlagbaren Hubantrieb, welcher mit einem in axialer Richtung verschiebbaren Verschlußteil wirkverbunden ist, ist aus DE-C-2 318 165 bekannt. Dieses Ventil ist jedoch als molchbare Abfüllarmatur mit nur einer Durchflußrichtung ausgebildet. Außerdem ist die Ausbildung und Anordnung des Strömungskörpers sehr aufwendig.

Aufgabe der vorliegenden Erfindung ist die Schaffung eines Ventils der eingangs genannten Art, welches zur Anordnung in einer Rohrleitung für beide Durchflußrichtungen ausgebildet ist und geringe Außenabmessungen aufweist. Außerdem soll das Ventil vielseitig verwendbar und nach langer Betriebszeit noch einwandfrei funktionsfähig sein.

Erfindungsgemäß wird diese Aufgabe durch die kennzeichnenden Merkmale von Anspruch 1 gelöst. Besonders vorteilhafte Weiterbildungen der Erfindung sind in den abhängigen Ansprüchen gekennzeichnet.

Die Erfindung ist in der beiliegenden Zeichnung in Ausführungsbeispielen dargestellt und nachfolgend beschrieben. Es zeigen:
- Fig. 1: einen Längsschnitt durch das Ventil
- Fig. 2: eine Ausführungsvariante des in Fig. 1 dargestellten Ventils
- Fig. 3: eine Ausführungsvariante der Dichtungspartie des in Fig. 1 dargestellten Ventils in einem vergrösserten Teilschnitt und
- Fig. 4: eine weitere Ausführungsvariante der Dichtungspartie entsprechend Fig. 4.

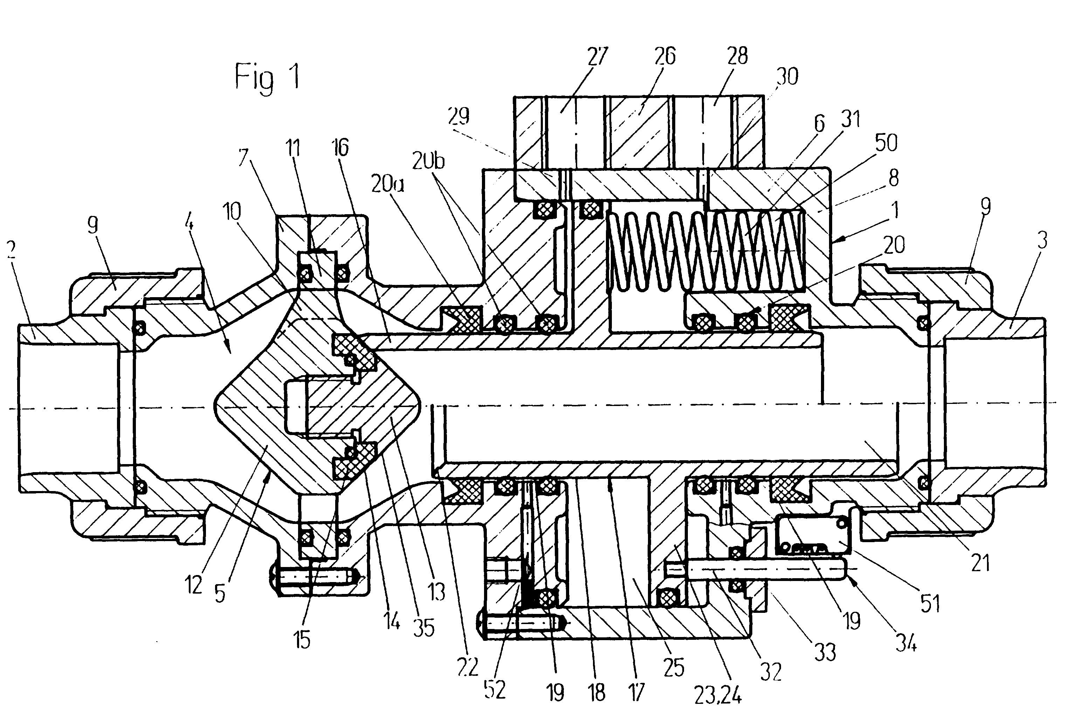

Das Gehäuse 1 des Ventils weist einen zu den anschliessenden Rohrleitungen 2 und 3 koaxialen Durchflußkanal 4 auf, in welchem ein Strömungskörper 5 angeordnet ist. Das Gehäuse 1 besteht aus einem Mittelteil 6, dem Strömungskörper 5 und beidseitig angeflanschten Anschlussteilen 7 und 8 mit Befestigungsmitteln 9 für die Rohrleitungen 2 und 3. Wie in Fig. 1 dargestellt, ist das Anschlußteil 8 mit dem Mittelteil 6 einstückig ausgebildet.

Der Strömungskörper 5 ist mittels Stegen 10 mit einem äusseren Ring 11 verbunden, welcher zwischen dem Anschlussteil 7 und dem Mittelteil 6 des Gehäuses 1 zentrisch fest eingespannt angeordnet ist, wodurch eine zum Durchflußkanal 4 koaxiale Anordnung des Strömungskörpers 5 gegeben ist. Der Strömungskörper 5 kann auch fest mit dem Gehäuse 1 bzw. dem Mittelteil 6 oder dem Anschlussteil 7 verbunden sein, was durch eine einstückige Herstellung erfolgt.

Der Durchflußkanal 4 ist im Bereich des Strömungskörpers 5 im Durchmesser vergrößert und für beide Durchflußrichtungen strömungsgünstig ausgebildet.

Auch der Strömungskörper 5 ist durch die vorzugsweise kegelförmige Ausbildung der gegenüberliegenden Anströmteile 12 und 13 für beide Durchflußrichtungen strömungsgünstig ausgebildet, wobei auch die Stege 10 im Querschnitt entsprechend strömungsgünstig ausgebildet sind. Durch die Form des Kegelmantels 35 des Anströmteils 13 ist eine gewünschte Durchflußkennlinie bestimmbar.

Der Strömungskörper 5 weist eine mit einer Dichtung 15 versehenen kegelige Dichtfläche 14 auf, welche mit einem stirnseitig anliegenden Verschlußteil 16 die Absperrung für den Mediumdurchfluß bildet.

Bei einer nicht dargestellten Ausführungsvariante kann eine zylindrische Dichtfläche am Außenumfang des Strömungskörpers 5 angeordnet werden, welche mit der Innenfläche des aufschiebbaren Verschlußteils die Absperrung für den Mediumdurchfluß bildet.

Das Verschlußteil 16 ist als Schieberhülse 17 ausgebildet, die mit ihrem Aussenumfang 18 in mit einer Dichtungsanordnung 20 versehenen Lagerpartie 19 des Gehäusemittelteils 6 und des Anschlußteils 8 beidseitig verschiebbar gelagert.

Die Dichtungsanordnung 20 weist vorzugsweise eine Lippendichtung 20a, welche zur Abdichtung des Durchflußmediums dient und zwei z.B. als Dichtungen wirkende Rundgummiringe 20b zur Abdichtung des Steuermediums auf. Zwischen den beiden Rundgummiringen 20b ist jeweils eine Leckagebohrung 52 angeordnet, durch welche verhindert wird, daß das Steuermedium in den Durchflußkanal 4 austreten oder umgekehrt das Durchflußmedium in den Zylinderraum 25 eintreten kann. Dies wird auch noch über die Lebensdauer der Dichtungen gewährleistet.

Eine durchgehende Öffnung 21 der Schieberhülse 17 ist Teil des Durchflußkanals 4, wobei deren Stirnfläche 22 an einem Ende zusammen mit der Dichtung 15 an der kegeligen Dichtfläche 14 die Durchflußabsperrung bildet. Ein scheibenförmiges Teil der Schieberhülse 17 bildet einen Kolben 23 eines Hubantriebes 24, wobei der Zylinderraum 25 des Hubantriebes 24 koaxial zum Durchflußkanal 4 im Mittelteil 6 des Gehäuses 1 angeordnet ist.

Am Gehäuse 1 ist ein Anschlußteil 26 mit Anschlüssen 27, 28 für ein pneumatisches oder hydraulisches Druckmedium angeordnet, wobei die Anschlüsse 27, 28 durch Kanäle 29, 30 jeweils mit einer Ringraumseite des Zylinderraumes 25 verbunden sind.

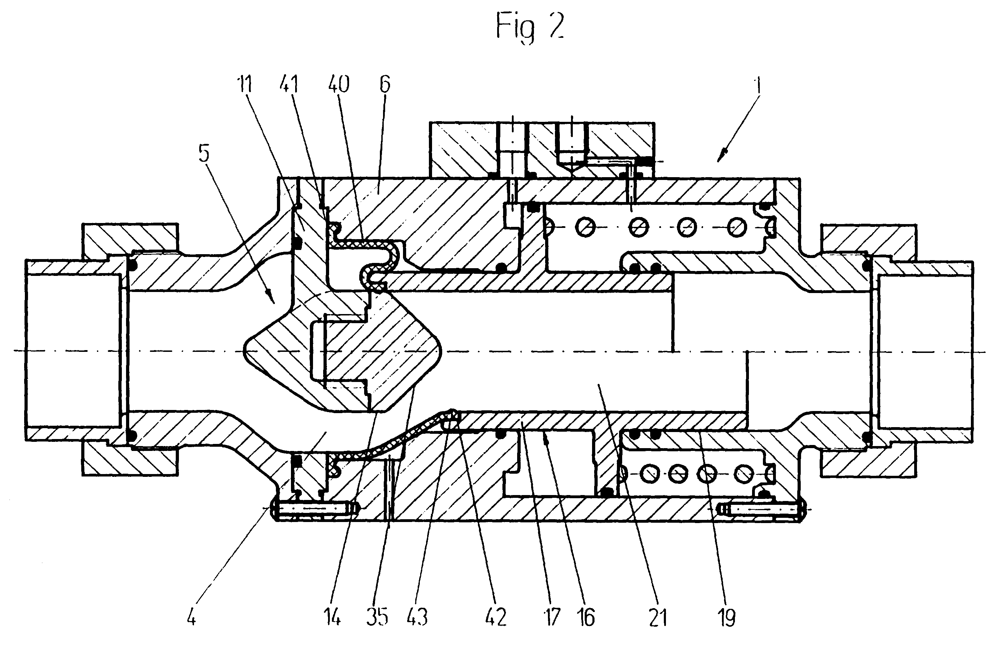

Im Ausführungsbeispiel gemäss Fig. 1 wird durch den Anschluß 27 die Öffnungsbewegung des Verschlußteils 16 mittels eines Druckmediums und die Schließbewegung mittels im Zylinderraum 25 angeordneter Federn 31 erzeugt. Durch die jeweilige Zufuhr eines Druckmediums über die Anschlüsse 27, 28 kann die Öffnungs- als auch die Schließbewegung mit dem Druckmedium erfolgen, oder es besteht auch die Möglichkeit, die Federn 31 auf der anderen Seite des Kolbens 23 anzuordnen, so daß die Öffnungsbewegung mit Federkraft erfolgt. Neben der gezeigten Anordnung mehrerer Federn 31, umfangsmäßig im Zylinderraum 25 verteilt, kann auch eine oder können mehrere Federn zueinander und zum Durchflußkanal 4 koaxial angeordnet werden. (Siehe auch Fig. 2.)

Vorzugsweise können je z.B. zwei radial gegenüberliegende Federpakete mit je drei Federn angeordnet werden, wobei diese in Ausnehmungen 50 des Gehäuses 6 bzw. des Anschlußteiles 8 geführt abgestützt sind.

Am Kolben 23 ist eine Stange 32 befestigt, welche in Öffnungsstellung des Ventils aus einer Bohrung 33 des Gehäuses 1 herausragt und in Schließstellung deren Ende innerhalb der Bohrung 33 liegt, so daß die Stange 32 einen Ventilstellungsanzeiger 34 bildet.

Die Stange 33 kann mit einem am Gehäuse 1 angeordneten elektrischen, optischen oder pneumatischen Schalter 51 den Ventilstellungsanzeiger 34 bilden, wodurch die Ventilstellung in einer entfernten Anzeige sichtbar bzw. als Rückmeldung feststellbar ist.

Wegen seiner kompakten Bauweise ist das Ventil auch bei geringen Platzverhältnissen zwischen die Rohrleitungen montierbar.

Das Ventil wird vorzugsweise für Rohrleitungssysteme aus Kunststoff, insbesondere auch für aggressive und korrosive Durchflußmedien verwendet, wobei mindestens die das Durchflußmedium berührenden Teile wie Gehäuse, Strömungskörper, Verschlußteil mit Kolben und Anschlußteile aus Kunststoff z.B. aus Polyviniylchlorid, Polypropylen, Polybuten, Polyethylen, Polyvinylidenfluorid, Polyamid oder Polytetrafluorethylen hergestellt sind.

Ein weiterer Vorteil des Ventils liegt darin, daß nur geringe Verstellkräfte für die Öffnungs- bzw. Schließbewegung erforderlich sind, da auf das Verschlußteil nur geringe Kräfte durch den Druck des Durchflußmediums wirken. Der für die Steuerung des Verschlußteiles 16 notwendige Druck ist nahezu unabhängig vom Druck des Mediums in der Rohrleitung.

Das beschriebene Ventil kann neben der Verwendung als Absperrventil auch als Durchflußregelventil verwendet werden, wobei zwischen Offenstellung und Schließstellung des Verschlußteils jede beliebige Stellung mit dem Hubantrieb einstellbar ist, wodurch eine Regelung der Druchflußmenge möglich ist.

Hierfür wird das Ventil mit einem Wegmeßgeber versehen, welcher die jeweilige Stellung des Verschlußteils z.B. am Ventilstellungsanzeiger 34 oder direkt am Kolben 23 durch elektrische Signale einer Steuereinheit in einem Regelkreis übermittelt, wobei die gemessenen Daten mit vorgegebenen Daten verglichen werden und die Steuerung über ein Magnetventil eine entsprechende Verstellung des Hubantriebes bewirkt.

Bei der Verwendung als Durchflußregelventil ist weiterhin die Art der Durchflußkennlinie ein Vorteil, welche zwischen 5 % und 100 % des Hubes nahezu eine konstante Steigung aufweist. Durch die entsprechende Wahl der Form des Kegelmantels 35 kann die Durchflußkennlinie auf die jeweilige Regelung optimiert werden.

Fig. 2 zeigt eine Ausführungsvariante des Ventils mit einer zwischen dem Gehäuse 1 und dem Verschlußteil 16 angeordneten Stülpmembrane 40.

Die Stülpmembrane 40 weist an einem Ende ein Flanschteil 41 auf, mittels welchem sie zwischen dem Mittelteil 6 des Gehäuses 1 und dem äußeren Ring 11 des Strömungskörpers 5 nach außen dichtend eingespannt ist. Das andere Ende ist in eine Ausdrehung 42 am Innenumfang der Schieberhülse 17 eingepreßt bzw. fest mit dieser verbunden.

Am Innenumfang dieses Endes der Stülpmembrane 40 ist ein Dichtwulst 43 angeordnet, welcher in Schließstellung des Verschlußteiles 16 mit der zylinderischen Dichtfläche 14 des Strömungskörpers 5 die dichte Absperrung des Durchflußes bildet. Die Stülpmembrane 40 kann auch an der Kegelmantelfläche 35 des Anströmteiles zur dichten Anlage gebracht werden.

Durch die Anordnung und Ausbildung der Stülpmembrane 40 ist in Offenstellung als auch in Zwischenstellungen bei Verwendung als Durchflußregelventil ein strömungsgünstiger Verlauf des Durchflußkanals 4 zwischen dem Gehäuse 1 und dem Verschlußteil 16 gegeben.

Durch die zu Fig. 2 beschriebene Ausbildung des Ventils weist dessen Durchflußkanal 4 keine scharfe Kanten und Hinterschneidungen auf, so dass keine Toträume vorhanden sind, wo sich Partikel absetzen können. Das Ventil weist besonders günstige Strömungsverhältnisse auf.

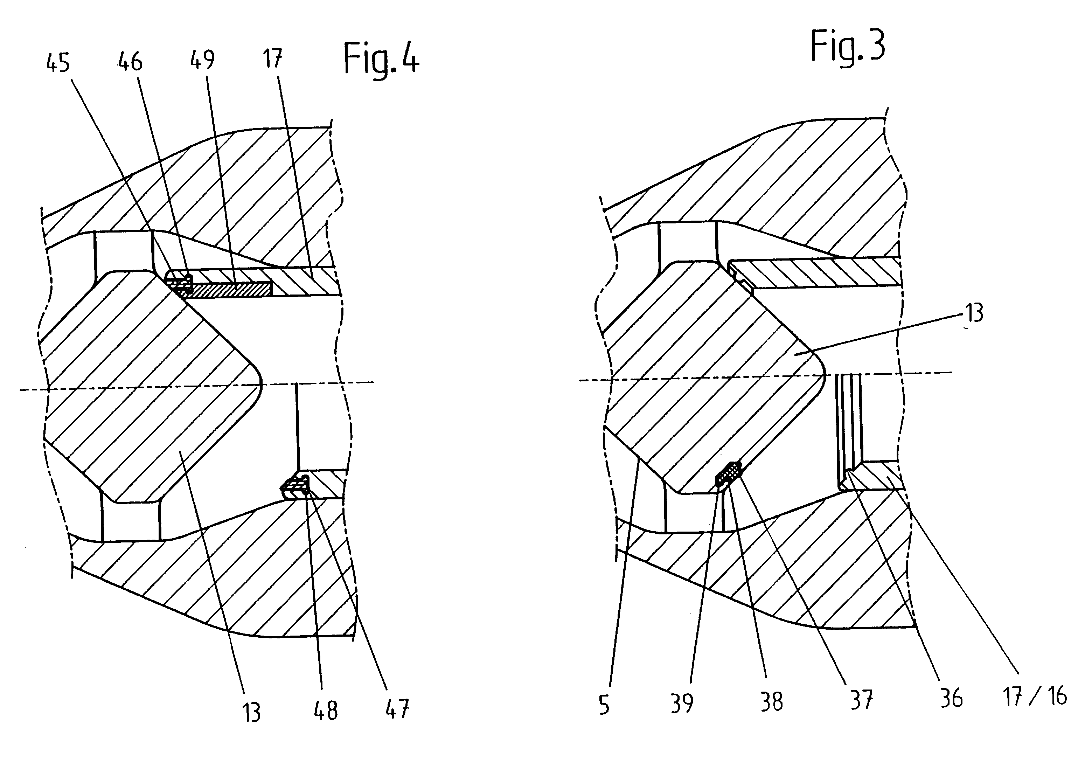

Eine weitere Ausführungsvariante für die Absperrung des Durchflusses zeigt Fig. 3. Hierbei wird eine Stirnseite 36 der Schieberhülse 17 auf eine schräg in radialer Richtung angeordnete Dichtfläche 37 am Anströmteil 13 dichtend angedrückt. Die Dichtfläche 37 ist an einer Dichtung 38 aus Elastomer, Thermoplast oder Polytetrafluorethylen angeordnet, welche in einer Ausnehmung 39 des Anströmteils 13 bzw. des Strömungskörpers 5 vorzugsweise fest eingespannt angeordnet oder eingespritzt ist.

Bei geringeren Anforderungen an die Dichtheit des Ventils kann die Schieberhülse 17 direkt mit der Stirnseite 36 auf der Kegelmantelfläche 35 dichten.

Fig. 4 zeigt eine weitere Abdichtungsmöglichkeit des Durchflußkanals 4.

Auf der Stirnseite der Schieberhülse 17 ist eine Dichtung 45 angeordnet, welche an einem Ende einen Wulst 46 aufweist und aus Elastomer oder aus Polytetrafluorethylen hergestellt und in einer Ausnehmung 47 angebracht ist. Die Ausnehmung 47 hat Hinterschnitte 48, in welchen der Wulst 46 der Dichtung 45 eingelegt wird, um die Dichtung 45 axial zu halten.

Die Dichtung 45 kann eingespritzt, eingeklebt oder eingepreßt sein.

Wie in der oberen Abbildung in Fig. 4 gezeigt, kann die Schieberhülse 17 am stirnseitigen Ende zweiteilig ausgeführt sein, damit die Dichtung 45 zwischen einem Innenteil 49 und der Schieberhülse 17 eingebracht werden kann. Auch hier wird die Dichtung 45 mit dem Wulst 46 durch Hinterschnitte 48 gehalten. Die Schieberhülse 17 und das Innenteil 49 sind fest verbunden, z.B. durch ein Gewinde, durch verkleben, aufpreßen oder verschweißen.

## Patentansprüche

1. Ventil mit einem Gehäuse (1), das einen Durchflußkanal (4) aufweist, in dem ein in beiden Strömungsrichtungen strömungsgünstig ausgebildeter Strömungskörper (5) mit in Achsrichtung des Durchflußkanals (4) entgegengesetzt zueinander gerichteten Anströmteilen (12, 13) angeordnet ist, wobei eine in Achsrichtung verschiebbare, im geschlossenen Zustand mit dem Strömungskörper (5) in dichtendem Eingriff stehende Schieberhülse (17) vorgesehen ist, die mit einem druckmediumbeaufschlagbaren Hubantrieb (24) mit einem Zylinderraum (25) wirkverbunden ist, dadurch **gekennzeichnet**, daß die Schieberhülse (17) im Durchflußkanal (4) über Rundgummiringe (20b) beidseitig des zum Durchflußkanal (4) hin offenen Zylinderraums (25) verschiebbar gelagert ist, wobei die Rundgummiringe (20b) den Zylinderraum (25) zugleich zum Durchflußkanal (4) hin abdichten, und die das Durchflußmedium berührenden Teile (1, 5, 6, 7, 8, 17) aus Kunststoff sind.

2. Ventil nach Anspruch 1, dadurch gekennzeichnet, daß die Anströmteile (12, 13) kegelförmig ausgebildet sind.

3. Ventil nach Anspruch 1 oder 2, dadurch gekennzeichnet, daß der Strömungskörper (5) mittels Stegen (10) mit dem Gehäuse (1) direkt fest verbunden oder mit einem äußeren Ring (11) verbunden ist, welcher zwischen zwei Gehäuseteilen (6, 7) fest eingespannt ist.

4. Ventil nach einem der Ansprüche 1 bis 3, dadurch gekennzeichnet, daß die Schieberhülse (17) mit ihrem Innenumfang (22) oder mit der Stirnseite (36) auf eine Dichtfläche (14, 37) des Strömungskörpers (5) aufschiebbar oder andrückbar ist, wobei eine Dichtung (15, 38, 45) entweder am Strömungskörper (5) oder an der Schieberhülse (17) angebracht ist.

5. Ventil nach einem der Ansprüche 1 bis 4, dadurch gekennzeichnet, daß der Zylinderraum (25) koaxial zum Durchflußkanal (4) angeordnet ist und der Kolben (23) fest mit der Schieberhülse (17) verbunden ist.

6. Ventil nach Anspruch 5, dadurch gekennzeichnet, daß am Kolben (23) eine Stange (32) befestigt ist, welche in Schließstellung des Ventils aus einer Bohrung (33) des Gehäuses (1) ragt und einen Ventil-Stellungsanzeiger (34) bildet, welcher als Signalgeber für eine elektrische, optische oder pneumatische Rückmeldung der Ventilstellung dient.

7. Ventil nach einem der Ansprüche 1 bis 6, dadurch gekennzeichnet, daß das Ventil als Absperrventil und/oder als Durchflußregelventil ausgebildet ist.

8. Ventil nach Anspruch 7, dadurch gekennzeichnet, daß der Hubantrieb (24) mit einem Wegmeßgeber wirkverbunden ist, welcher im Regelkreis für eine Steuerung des Hubantriebes (24) angeordnet ist.

9. Ventil nach einem der Ansprüche 1 bis 8, dadurch gekennzeichnet, daß die Durchflußkennlinie nahezu linear ist.

10. Ventil nach einem der Ansprüche 2 bis 8, dadurch gekennzeichnet, daß die Durchflußkennlinie durch die Form des Kegelmantels (35) vom Anströmteil (13) wählbar ist.

11. Ventil nach einem der Ansprüche 1 bis 10, dadurch gekennzeichnet, daß der für die Verschiebung der Schieberhülse (17) mittels des Hubantriebs (24) notwendige Druck nahezu unabhängig vom Druck des Durchflußmediums ist.

12. Ventil nach einem der Ansprüche 1 bis 3, dadurch gekennzeichnet, daß zwischen dem Gehäuse (1) und der Schieberhülse (17) eine Stülpmembrane (40) angeordnet ist.

13. Ventil nach Anspruch 12, dadurch gekennzeichnet, daß die Stülpmembrane (40) am Innenumfang des mit der Schieberhülse (17) verbundenen Endes einen Dichtwulst (43) aufweist, welcher in Schließstellung der Schieberhülse (17) auf der zylindrischen Dichtfläche (14) oder der Kegelmantelfläche (35) des Strömungskörpers (5) aufliegt.

14. Ventil nach einem der Ansprüche 12 oder 13, dadurch gekennzeichnet, daß die Innenkontur der Stülpmembrane (40) in Öffnungsstellungen einen strömungsgünstigen übergang vom Gehäuse (1) zur Schieberhülse (17) des Durchflußkanals (4) bildet.

15. Ventil nach Anspruch 4, dadurch gekennzeichnet, daß die Elastomerdichtung (38) im Strömungskörper (5) oder die Elastomerdichtung (47) an der Stirnseite der Schieberhülse (17) eingespritzt angeordnet ist.

16. Ventil nach einem der Ansprüche 4 bis 15, dadurch gekennzeichnet, daß die Schieberhülse (17) in mit die Rundgummiringe (20b) aufweisenden Dichtungsanordnungen (20) versehenen Lagerpartien (19) des Gehäuses (1) gelagert ist, wobei jeweils zwischen zwei Rundgummiringen (20b) eine Leckagebohrung (52) angeordnet ist.

## Claims

1. Valve with a housing (1) which has a flow channel (4) in which is arranged a flow body (5) constructed to be favourable to flow in both directions of current flow, having flow parts (12, 13) aligned in opposite directions to each other in the axial direction of the flow channel (4), a sliding sleeve (17) being provided which is movable in the axial direction and in the closed state is in sealing engagement with the flow body (5), and which is operatively connected to a fluid-actuated stroke drive (24) with a cylinder chamber (25), characterised in that the sliding sleeve (17) is mounted movably in the flow channel (4) by means of round rubber rings (20b) on both sides of the cylinder chamber (25) open to the flow channel (4), the round rubber rings (20b) at the same time sealing the cylinder chamber (25) with respect to the flow channel (4), and the portions (1, 5, 6, 7, 8, 17) which make contact with the flow medium are made of plastics.

2. Valve according to claim 1, characterised in that the flow parts (12, 13) are of conical construction.

3. Valve according to claim 1 or 2, characterised in that the flow body (5) is fixedly connected by means of cross-pieces (10) directly to the housing (1) or to an outer ring (11) which is firmly clamped between two housing portions (6, 7).

4. Valve according to one of claims 1 to 3, characterised in that the sliding sleeve (17) can be pushed or pressed with its inner circumference (22) or with its end (36) onto a sealing surface (14, 37) of the flow body (5), a seal (15, 38, 45) being fitted either on the flow body (5) or on the sliding sleeve (17).

5. Valve according to one of claims 1 to 4, characterised in that the cylinder chamber (25) is arranged coaxially with the flow channel (4), and the piston (23) is fixedly connected to the sliding sleeve (17).

6. Valve according to claim 5, characterised in that on the piston (23) a rod (32) is secured which in the closed position of the valve protrudes out of a bore (33) of the housing (1) and forms a valve-position indicator (34) which serves as a signal transmitter for an electric, optical or pneumatic sensing signal of the valve position.

7. Valve according to one of claims 1 to 6, characterised in that the valve is constructed as a cut-off valve and/or a flow-regulating valve.

8. Valve according to claim 7, characterised in that the stroke drive (24) is operatively connected to a travel sensor which is arranged in the regulating circuit for controlling the stroke drive (24).

9. Valve according to one of claims 1 to 8, characterised in that the flow characteristic is almost linear.

10. Valve according to one of claims 2 to 8, characterised in that the flow characteristic can be selected by the shape of the conical casing (35) of the flow part (13).

11. Valve according to one of claims 1 to 10, the sliding sleeve (17) by means of the stroke drive (24) is practically independent of the pressure of the flow medium.

12. Valve according to one of claims 1 to 3, characterised in that an inverting diaphragm (40) is arranged between the housing (1) and the sliding sleeve (17).

13. Valve according to claim 12, characterised in that the inverting diaphragm (40) has on the inner circumference of the end connected to the sliding sleeve (17) a sealing bead (43) which in the closed position of the sliding sleeve (17) lies on the cylindrical sealing surface (14) or the conical casing surface (35) of the flow body (5).

14. Valve according to one of claims 12 or 13, characterised in that the inner contour of the inverting diaphragm (40) in open positions forms a flow-favourable transition from the housing (1) to the sliding sleeve (17) of the flow channel (4).

15. Valve according to claim 4, characterised in that the elastomer seal (38) in the flow body (5) or the elastomer seal (47) on the front end of the sliding sleeve (17) is injected in.

16. Valve according to one of claims 4 to 15, characterised in that the sliding sleeve (17) is mounted in bearing parts (19) of the housing (1) which are provided with sealing arrangements (20) having the round rubber rings (20b), a leakage bore (52) being respectively arranged between two round rubber rings (20b).

## Revendications

1. Vanne munie d'une boîte (1), qui comprend un canal d'écoulement (4) dans lequel est agencé un corps d'écoulement (5) construit de manière à pouvoir laisser passer efficacement les courants dans les deux sens et muni de pièces d'afflux (12, 13) placées dos à dos dans le sens axial du canal d'écoulement (4), sachant qu'il est prévu une chemise tiroir (17) qui peut être déplacée dans le sens axial, qui est en contact étanche avec le corps d'écoulement (5) en position fermée et qui se trouve en liaison active avec un dispositif d'entraînement de course (24) pouvant être alimenté par un fluide comprimé et comportant un espace de cylindre (25), caractérisée en ce que la chemise tiroir (17) est logée de manière à pouvoir être déplacée dans le canal d'écoulement (4) par l'intermédiaire d'anneaux ronds en caoutchouc (20b) situés des deux côtés de l'espace de cylindre (25) ouvert vers le canal d'écoulement (4), les anneaux ronds en caoutchouc (20b) rendant en même temps l'espace de cylindre (25) étanche vis-à-vis du canal d'écoulement (4), et en ce que les pièces (1, 5, 6, 7, 8, 17) qui sont en contact avec le fluide d'écoulement sont en matière plastique.

2. Vanne selon la revendication 1, caractérisée en ce que les pièces d'afflux (12, 13) sont construites en forme de cônes.

3. Vanne selon la revendication 1 ou 2, caractérisée en ce que le corps d'écoulement (5) est fixé directement à la boîte (1) par l'intermédiaire de traverses (10) ou est lié à un anneau (11) extérieur qui est encastré, fixe, entre deux parties de boîte (6, 7).

4. Vanne selon l'une des revendications 1 à 3, caractérisée en ce que la chemise tiroir (17) peut être poussée ou serrée, au niveau de sa circonférence intérieure (22) ou de sa face frontale (36), contre une surface d'étanchéité (14, 37) du corps d'écoulement (5), une garniture d'étanchéité (15, 38, 45) étant placée soit sur le corps d'écoulement (5) soit sur la chemise tiroir (17).

5. Vanne selon l'une des revendications 1 à 4, caractérisée en ce que l'espace de cylindre (25) est coaxial au canal d'écoulement (4) et en ce que le piston (23) est fixé à la chemise tiroir (17).

6. Vanne selon la revendication 5, caractérisée en ce qu'une tige (32) est fixée au piston (23), laquelle tige dépasse d'un trou (33) de la boîte (1), lorsque la vanne est en position fermée, et constitue un indicateur de position de vanne (34) qui sert de transmetteur de signaux pour donner une information en retour, électrique, optique ou pneumatique, concernant la position de la vanne.

7. Vanne selon l'une des revendications 1 à 6, caractérisée en ce que la vanne est conçue comme une soupape d'arrêt et/ou comme une soupape de régulation d'écoulement.

8. Vanne selon la revendication 7, caractérisée en ce que le dispositif d'entraînement de course (24) est en liaison active avec un système de mesure de course qui est placé dans le circuit de réglage destiné à une commande du dispositif d'entraînement de course (24).

9. Vanne selon l'une des revendications 1 à 8, caractérisée en ce que la courbe caractéristique d'écoulement est presque linéaire.

10. Vanne selon l'une des revendications 2 à 8, caractérisée en ce que la courbe caractéristique d'écoulement peut être fixée par la forme de la surface latérale conique (35) de la pièce d'afflux (13).

11. Vanne selon l'une des revendications 1 à 10, caractérisée en ce que la pression nécessaire au déplacement de la chemise tiroir (17) au moyen du dispositif d'entraînement de course (24) est presque indépendante de la pression du fluide d'écoulement.

12. Vanne selon l'une des revendications 1 à 3, caractérisée en ce qu'une membrane emboutie (40) est disposée entre la boîte (1) et la chemise tiroir (17).

13. Vanne selon la revendication 12, caractérisée en ce que la membrane emboutie (40) comporte sur la circonférence intérieure de son extrémité liée à la chemise tiroir (17) un bourrelet d'étanchéité (43) qui se trouve, lorsque la chemise tiroir (17) est en position fermée, contre la surface d'étanchéité (14) cylindrique ou contre la surface latérale conique (35) du corps d'écoulement (5).

14. Vanne selon l'une des revendications 12 ou 13, caractérisée en ce que le contour intérieur de la membrane emboutie (40) forme, dans des positions ouvertes, une transition, favorisant l'écoulement, entre la boîte (1) et la chemise tiroir (17) du canal d'écoulement (4).

15. Vanne selon la revendication 4, caractérisée en ce que la garniture d'étanchéité en élastomère (38) est agencée, injectée, dans le corps d'écoulement (5) ou en ce que la garniture d'étanchéité en élastomère (47) est agencée, injectée, sur la face frontale de la chemise tiroir (17).

16. Vanne selon l'une des revendications 4 à 15, caractérisée en ce que la chemise tiroir (17) est logée dans des parties formant supports (19) de la boîte (1) qui sont munies des dispositifs d'étanchéité (20) comportant des anneaux ronds en caoutchouc (20b), un trou de fuite (52) étant agencé à chaque fois entre deux anneaux ronds en caoutchouc (20b).
